# FASCICULE DE BREVET EUROPEEN

(11) **EP 1 738 237 B1**
(45) Date de publication et mention de la délivrance du brevet: **01.08.2007**
(21) Numéro de dépôt: 05746744.1
(22) Date de dépôt: 13.04.2005
(51) Int. Cl.: G05D 1/02

(54) **PROCEDE DE COMMANDE DE LA TRAJECTOIRE D'UN VEHICULE**
VERFAHREN ZUR STEUERUNG EINER FAHRZEUGBAHN
METHOD FOR CONTROLLING THE TRAJECTORY OF A VEHICLE

(30) Priorité: 16.04.2004 FR 0403994
(43) Date de publication de la demande: 03.01.2007
(73) Titulaire: RENAULT TRUCKS, 69800 St Priest (FR); RENAULT S.A.S., 92100 Boulogne Billancourt (FR)
(72) Inventeur: CLAEYS, Xavier, 75015 Paris (FR); GARNIER, Laurent, F-57180 TERVILLE (FR)
(74) Mandataire: Palix, Stéphane
(86) Numéro de dépôt international: PCT/FR2005/050235
(87) Numéro de publication internationale: WO 2005/106610

(56) Documents cités:
- US-A- 3 893 536
- US-A1- 2004 010 371

## Description

### Domaine technique

L'invention concerne un système d'assistance de conduite pour véhicules automobiles et précisément de suivi de trajectoire automatisé. Elle trouve une application toute particulière dans le secteur des véhicules industriels, et notamment des camions.

### Techniques antérieures

De façon générale, les systèmes de suivi de trajectoire automatisé peuvent fonctionner en utilisant les lignes de marquage au sol tracées sur la chaussée pour définir les voies de circulation.

Ainsi, on connaît les systèmes d'assistance pour la conduite qui utilisent une ou plusieurs caméras destinées à surveiller la position des lignes situées de part et d'autre du véhicule, lorsqu'il circule dans une voie déterminée, voir par exemple la demande US 2004/0010371 A1. L'analyse des images élaborées par ces caméras permet de définir la position relative du véhicule par rapport à ces deux références. Cette position peut être comparée à une trajectoire théorique, interpolée à partir des images des deux lignes tracées sur la chaussée. Cette trajectoire théorique se situe généralement sensiblement en position médiane par rapport aux deux lignes tracées sur la chaussée.

Une action sur la commande du braquage de véhicule, élaborée à partir de cet écart permet de le minimiser, et donc d'aligner aussi rapidement que possible la trajectoire mesurée sur la trajectoire théorique.

Autrement dit, la valeur de consigne de l'écart entre la trajectoire mesurée et la trajectoire théorique est nulle, ce qui permet de rapprocher le plus rapidement possible la trajectoire de la trajectoire théorique.

Les caractéristiques de cette chaîne de commande sont influencées par des configurations particulières, rencontrées pendant des phases transitoires. En effet, le temps de réponse, ou la "raideur" de la commande, doivent être limités pour éviter d'imposer des accélérations latérales trop importantes dans certaines configurations. En effet, dans le cas par exemple où le véhicule se trouve à l'aplomb d'une bifurcation ou d'une bretelle d'autoroute, il est nécessaire de prendre en compte les discontinuités dans les lignes de référence pour élaborer la trajectoire théorique.

On conçoit donc qu'il est nécessaire que la chaîne de commande ne soit pas trop réactive pour éviter d'aboutir à une trajectoire du véhicule qui serait trop saccadée. Autrement dit, un réglage de la chaîne de commande favorable au confort de conduite obligerait à dégrader les performances, en termes de comportement du véhicule. En d'autres termes, les solutions existantes obligent à faire un compromis entre confort et performances.

Le même type de problème peut intervenir lors de l'activation du mode de commande automatique de la trajectoire.

En effet, si au moment de l'activation, le véhicule ne se situe pas au niveau de la trajectoire théorique élaborée à partir du marquage au sol, une commande trop réactive pourrait engendrer des déplacements brusques du véhicule, néfastes pour le confort du conducteur, voire même pour la tenue de route.

Le problème que se propose donc de résoudre l'invention est celui de la limitation de la réactivité de la chaîne de commande imposée par l'asservissement entre la trajectoire mesurée et la trajectoire théorique avec un écart d'une valeur nulle, au moyen d'une méthode simple et facilement configurable, et qui ne dégrade pas les performances de l'asservissement.

### Exposé de l'invention

L'invention concerne donc un procédé de commande de la trajectoire d'un véhicule. De façon connue, on élabore un critère représentatif de l'écart entre la trajectoire mesurée et/ou évaluée, et une trajectoire théorique définie par des repères liés à la chaussée. Ces repères peuvent par exemple être des lignes de marquage au sol. De façon classique, cet écart est asservi à une valeur de référence.

Conformément à l'invention, cette valeur de référence est variable, et peut s'écarter d'une valeur nulle pendant des périodes de durée prédéterminée.

Autrement dit, l'invention consiste à assurer l'asservissement de la trajectoire, en ne fixant pas cette consigne d'écart systématiquement à une valeur nulle. Au contraire, l'intérêt de l'invention consiste à fixer cette consigne d'écart à une valeur qui peut être non nulle, pendant certaines phases de fonctionnement.

De la sorte, la chaîne de commande de la trajectoire, qui agit généralement sur l'organe de braquage peut présenter des caractéristiques de performance élevées, grâce à une dynamique d'asservissement très réactive.

En effet, lorsque le système se trouve en régime établi, la valeur de référence, correspondant à la consigne d'écart recherché est fixée à une valeur nulle, et la réactivité élevée de la commande assure donc un suivi très efficace. Dans le cas d'un suivi des lignes de marquage au sol, cet écart de valeur nulle se matérialise par la distance nulle entre l'axe du véhicule et la trajectoire théorique. Dans le cas du suivi du véhicule précédent, le système prend en compte la trajectoire théorique, en intégrant la distance qui sépare le véhicule de celui qui précède, ainsi que la variation de la courbure de la trajectoire suivie, pour élaborer un axe de visée théorique. Autrement dit, la valeur d'écart angulaire entre l'axe du véhicule et l'axe de visée réelle du véhicule qui précède, n'est pas forcément nulle, notamment en virage, mais c'est l'angle que forme l'axe de visée théorique et l'axe de visée réel qui est asservi à une valeur nulle.

A l'inverse, lorsque l'on se trouve dans une phase transitoire, correspondant par exemple à l'activation du suivi automatique de trajectoire, la consigne d'écart est maintenue à une valeur non nulle, ce qui se traduit par un alignement plus lent par rapport à la trajectoire théorique sans pour autant dégrader les performances de la commande en position par rapport à la consigne. La dynamique du suivi de trajectoire est donc plus souple, de manière à procurer un confort de conduite.

En assurant donc une variation controlée de cette valeur de référence, on maîtrise ainsi le temps de réaction global du système, et ce tout en bénéficiant d'une chaîne de commande très réactive pour les phases qui le requièrent.

En pratique, la valeur de référence peut être fixée à une valeur non nulle dans différents cas de figures. Ainsi, il peut s'agir des périodes correspondant au démarrage du véhicule, pendant lesquelles le véhicule est décalé de la position théorique située à mi-chemin des lignes de marquage au sol. Le même cas de figure intervient lorsque le système de suivi automatique de la trajectoire est activé alors que le véhicule est écarté de sa future trajectoire théorique.

Cette valeur de référence peut également être augmentée dans le cas où le véhicule change de voie, et subit donc une variation d'orientation de sa trajectoire. Il est également possible de procéder à l'augmentation de cette valeur de référence lorsque l'on détecte des variations rapides de l'écart entre la trajectoire mesurée et la trajectoire théorique. Cette détection peut correspondre à l'apparition de divergences des voies de marquage au sol dans lesquelles il convient de ne pas générer de brusques accélérations transversales. Il peut être avantageux de mettre en oeuvre la correction conforme à l'invention dans de nombreux autres cas de figure.

### Description sommaire de la figure

La manière de réaliser l'invention ainsi que les avantages qui en découlent ressortiront bien de la description du mode de réalisation qui suit à l'appui de l'unique figure annexée qui est un schéma illustrant le principe du système de commande conformément à l'invention.

### Manière de réaliser l'invention

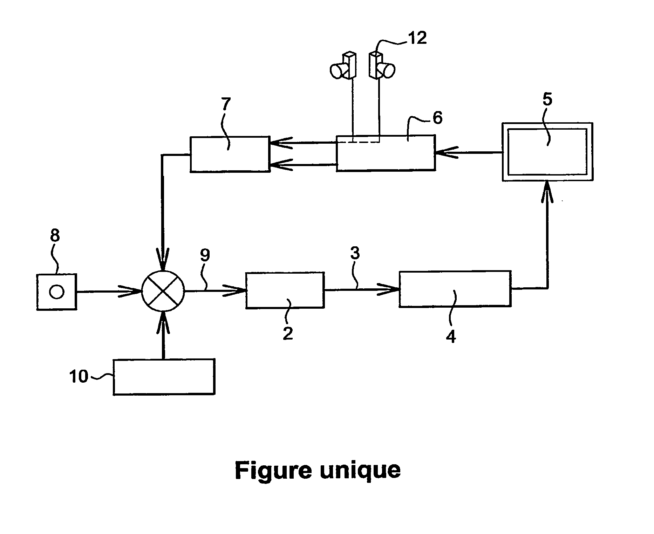

Le système de commande illustré à la figure 1 comporte de façon conventionnelle un étage (2) permettant d'élaborer une consigne (3) à destination d'un actionneur de direction (4). Cet actionneur de direction permet de générer les déplacements du véhicule dont le modèle (5) permet d'estimer la trajectoire.

Cette trajectoire peut être mesurée par l'intermédiaire d'un capteur qui peut avantageusement tirer partie des images élaborées par un système de vision (12) générant des images de la chaussée, et permettant de définir plus particulièrement le positionnement du véhicule par rapport aux lignes de marquage au sol.

Cette trajectoire peut être comparée par rapport à la trajectoire théorique correspondant sensiblement à la position médiane de la ligne de marquage au sol. Un étage (7) permet d'élaborer l'écart représentatif de la distance entre cette trajectoire théorique et la trajectoire mesurée. On notera au passage que cet écart peut être élaboré en combinant deux types de mesure distincts.

En effet, la mesure de la trajectoire réelle du véhicule peut être estimée non seulement à partir du système de vision (12), qui détermine également la trajectoire théorique, mais également à partir d'autres types de systèmes, du type GPS ou autre.

Cet écart de trajectoire alimente l'étage de commande de l'actionneur d'action (2) avec la comparaison avec une valeur de référence (8) généralement nulle.

Conformément à l'invention, cette valeur de référence peut être modifiée par l'ajout d'une composante supplémentaire (10). Cette composante supplémentaire (10) n'est ajoutée de façon épisodique, pour compenser des situations transitoires évoquées précédemment.

De la sorte, l'étage de commande (2) peut présenter des performances importantes en termes de rapidité, et assurer donc un suivi de trajectoire très réactif, lorsque la valeur de référence est maintenue à une valeur nulle. Ces performances de réactivité sont conservées dans des phases transitoires, mais la consigne d'écart (10) décroît de manière plus lente depuis une valeur non nulle, pour éviter les commandes trop brusques au niveau du système de direction.

Il ressort de ce qui précède que le procédé de commande conforme à l'invention présente l'avantage de permettre l'emploi d'un système de commande très réactif, aux performances supérieures à ceux équipant les systèmes existant, puisque les phases transitoires sont traitées avec une consigne d'écart non nulle et destinée à compenser des écarts initiaux importants.

## Revendications

1. Procédé de commande de la trajectoire d'un véhicule, pendant lequel on élabore un critère (9) représentatif de l'écart entre la trajectoire mesurée ou évaluée du véhicule, et une trajectoire théorique définie par des repères liés à la chaussée; et pendant laquelle on asservit cet écart à une valeur de référence, **caractérisé en ce que** ladite valeur de référence (10) est variable, et s'écarte d'une valeur nulle pendant des périodes de durée prédéterminée.

2. Procédé de commande selon la revendication 1, **caractérisé en ce que** la valeur de référence est fixée à une valeur non nulle pendant les périodes correspondant au démarrage du véhicule.

3. Procédé de commande selon la revendication 1, **caractérisé en ce que** la valeur de référence est fixée à une valeur non nulle pendant les périodes correspondant à l'activation du procédé de commande.

4. Procédé de commande selon la revendication 1, **caractérisé en ce que** la valeur de référence est fixée à une valeur non nulle pendant les périodes correspondant à des variations d'orientation de la trajectoire.

5. Procédé de commande selon la revendication 1, **caractérisé en ce que** la valeur de référence est fixée à une valeur non nulle pendant les périodes correspondant à des variations rapides de l'écart entre la trajectoire mesurée et la trajectoire théorique.

6. Procédé de commande selon la revendication 1, **caractérisé en ce que** la valeur de référence est fixée à une valeur non nulle pendant la période correspondant à une variation rapide de position des repères liés à la chaussée.

## Claims

1. A method for controlling the trajectory of a vehicle wherein one produces a criterion (9) representative of the difference between the measured or evaluated trajectory of the vehicle and a theoretical trajectory defined by identification marks associated with the carriageway and during which one slaves this difference to a reference value, **characterised in that** said reference value (10) is variable and differs from a zero value during periods of a predetermined duration.

2. A method for controlling as claimed in claim 1, **characterised in that** the reference value is set to a non-zero value during periods that correspond to starting of the vehicle.

3. A method for controlling as claimed in claim 1, **characterised in that** the reference value is set to a non-zero value during periods that correspond to activating the method for controlling.

4. A method for controlling as claimed in claim 1, **characterised in that** the reference value is set to a non-zero value during periods that correspond to variations in the direction of the trajectory.

5. A method for controlling as claimed in claim 1, **characterised in that** the reference value is set to a non-zero value during periods that correspond to rapid variations in the difference between the measured trajectory and the theoretical trajectory.

6. A method for controlling as claimed in claim 1, **characterised in that** the reference value is set to a non-zero value during the period that corresponds to rapid variation in the position of identification marks associated with the carriageway.

## Patentansprüche

1. Verfahren zur Steuerung der Spur eines Fahrzeugs, im Verlauf dessen ein Kriterium (9) ermittelt wird, das die Abweichung zwischen der gemessenen oder berechneten Spur des Fahrzeugs und einer theoretischen Spur, die von straßengebundenen Markierungen definiert wird, repräsentiert, und im Verlauf dessen diese Abweichung auf einen Sollwert geregelt wird, **dadurch gekennzeichnet, dass** der Sollwert (10) veränderlich ist und während Perioden von vorbestimmter Dauer von einem Wert Null abweicht.

2. Steuerungsverfahren nach Anspruch 1, **dadurch gekennzeichnet, dass** der Sollwert während der Perioden, die- dem Anfahren des Fahrzeugs entsprechen, auf einen Wert ungleich Null festgelegt wird.

3. Steuerungsverfahren nach Anspruch 1, **dadurch gekennzeichnet, dass** der Sollwert während der Perioden, die der Aktivierung des Steuerungsverfahrens entsprechen, auf einen Wert ungleich Null festgelegt wird.

4. Steuerungsverfahren nach Anspruch 1, **dadurch gekennzeichnet, dass** der Sollwert während der Perioden, die Veränderungen der Orientierung der Spur entsprechen, auf einen Wert ungleich Null festgelegt wird.

5. Steuerungsverfahren nach Anspruch 1, **dadurch gekennzeichnet, dass** der Sollwert während der Perioden, die schnellen Veränderungen der Abweichung zwischen der gemessenen Spur und der theoretischen Spur entsprechen, auf einen Wert ungleich Null festgelegt wird.

6. Steuerungsverfahren nach Anspruch 1, **dadurch gekennzeichnet, dass** der Sollwert während der Perioden, die einer schnellen Veränderung der Position der straßengebundenen Markierungen entsprechen, auf einen Wert ungleich Null festgelegt wird.
